# EUROPEAN PATENT SPECIFICATION

(11) **EP 0 478 236 B1**
(45) Date of publication and mention of the grant of the patent: **12.06.1996**
(21) Application number: 91308588.2
(22) Date of filing: 20.09.1991
(51) Int. Cl.: B60R 16/02

(54) **Apparatus and method for connecting and disconnecting of a vehicle mounted battery**
Vorrichtung und Verfahren zum Verbinden und Lösen einer Fahrzeugbatterie
Appareil et méthode pour connecter et déconnecter une batterie d'un véhicule

(30) Priority: 26.09.1990 US 588244; 04.09.1991 US 754609
(43) Date of publication of application: 01.04.1992
(73) Proprietor: CROWN EQUIPMENT CORPORATION, New Bremen, Ohio 45869 (US)
(72) Inventor: Billger, Steven C., Celina, Ohio 45822 (US); Watercutter, Nita L., Sidney, Ohio 45365 (US)
(74) Representative: Warren, Anthony Robert

(56) References cited:
- DE-A- 2 435 705
- DE-A- 3 426 783
- FR-A- 2 219 032
- FR-A- 2 332 877
- GB-A- 2 163 610

## Description

This invention relates to a method and apparatus to assist connecting and disconnecting high capacity batteries to and from battery powered vehicles, such as lift trucks and other materials handling vehicles.

In a typical warehouse operation, battery powered vehicles use battery packages that are often charged separately from the vehicle. For example, a lift truck may use a battery package for about 8 hours, and at the end of a shift, the battery package will be replaced with a freshly charged unit and the used battery package will be placed on a charger, thus permitting the vehicle to begin the next shift with a full source of power. Often, a given facility will use vehicles from different manufacturers, with all of the vehicles using the same batteries. Thus, a battery package may be used on one type of vehicle, recharged and then used on a vehicle from another manufacturer. Clearly, there is a need for an assist device separate from the connector that does not deter the standardization of the connectors used between the battery and the vehicle.

The most common connectors used between a rechargeable battery and a vehicle in the United States, and the one recommended by several battery manufacturers, are a pair of SB or SBX Series connectors made by Anderson Power Products, or an equivalent by other manufacturers. In other countries the SBX Series or similar connectors are often used. Two identical connectors are used, the first is connected to the cables attached to the vehicle's electrical system, the second is connected to the cables attached to the battery. Such connectors are illustrated in sales literature relating to SBX connectors produced by Anderson Power Products.

Since these connectors carry up to 350 amperes of current, they are often difficult to connect and disconnect, especially when this operation is carried out in a confined space. This is due to the size of the contacts and the spring loading applied to those contacts.

To assist with disconnecting the connector components, some connector manufacturers have developed disconnect aids or devices. One device is merely a handle bolted onto the battery connector. Another device is a hinged handle attached to the battery connector and a cooperating mounting component attached to the vehicle connector whereby rotation of the hinged handle moves the connector components together or apart.

The connectors themselves include a body having a pair of longitudinally extending channels or tubes through which the cables extend and which shield the contacts attached at the ends of the cables from inadvertent shorting. Between and integral with the channels is a central portion in which is formed two or more openings for receiving the mounting hardware for the disconnect devices.

The first or vehicle connector is often securely attached to the vehicle. However, the configuration of a bolted handle or other disconnect hardware, when attached to the second or battery side connector, can sometimes prevent that connector from being installed when the battery is used on other vehicles or in other applications because of space limitations, thereby necessitating the removal of the handle prior to using that particular battery. What is needed is a method and apparatus that permits the battery connector to be easily connected or disconnected from the vehicle connector without requiring any additional hardware to be mounted to the battery connector.

DE-A-2435705 discloses an electrical connecting device for applications such as lighting circuits. The device includes a first sleeve to which a first coupling part is rigidly connected and a second sleeve in which a second coupling part is permanently fixed in a manner which permits it to slide towards and away from the first coupling part to effect connection and disconnection of the coupling parts. Rotation of an angled lever mounted in the second sleeve causes a stud at one end of the lever to slide in a complementary slot in the second coupling part thus displacing it with respect to the second sleeve.

The object of the present invention is to provide a battery connector assist unit which can aid in disconnecting or connecting a battery connector, but which does not have to be fixedly attached to the battery side connector.

The object of the present invention is achieved by an apparatus as set out in claim 1 and a method as set out in claim 17.

One of the characteristics of the SB or SBX Series connectors is that they are provided with a set of openings between the cables, which openings are intended to accept mounting hardware, either for a handle or other type of disconnect device. For the SB Series connector, a pair of longitudinally spaced holes are formed; for the SBX Series connector, there are four holes. The present invention makes use of these holes in the following manner. The electrical connector attached to the vehicle is usually mounted in fixed relation to the vehicle by means of mounting bolts extending through these holes. A movable or slidable member, also associated with the vehicle, is provided with upstanding beams that are spaced apart and arranged to engage the holes in the battery connector. The beams are typically smooth sided cylindrical pins, but they can be of any shape to match the opening in the connector. A handle or lever is associated with the slidable member to assist in moving it longitudinally of the connectors. When the battery connector is placed over these beams, force can be applied to the slidable member to move the battery connector either forward to connect the two components, or rearward to assist in disconnecting the battery connector from the vehicle connector.

More specifically, the battery connector assist unit of this invention comprises a base having means for securing a first or vehicle side component of a battery connector and a slidable member interconnected to the base comprising a handle member, and a slide base having an upper surface and a lower surface, the lower surface being adjacent to the base and with the slidable member being slidable over the base responsive to force exerted on the handle member, the slidable member having means for retaining a second or battery side component of a battery connector.

In one embodiment of the invention, the base includes means forming at least one slot therein, with the slidable member including means for engaging at least one slot for maintaining alignment between the base and the slidable member. The base also includes means for aligning a battery connector first part with a battery connector second part. The slidable member has side walls being spaced apart enough to accommodate a battery connector second part therebetween. Preferably the slidable member is located directly adjacent the base. This device also includes means for retaining a battery connector second part which includes at least one beam extending perpendicularly from the upper surface. A cover plate may be attached to this first embodiment of the invention a spaced distance above the base. Further, the base of this embodiment has means for regulating the closure of the cover plate.

In a second embodiment of the invention, the slidable member has at least one slot therein, with the base having means for engaging at least one slot. The base includes means for aligning a battery connector first part with a battery connector second part, while the slidable member includes means for aligning a battery connector second part with a battery connector first part, preferably the slidable member is located directly adjacent the base.

In a third embodiment of the invention, the slidable member is positioned above a base channel member, which base channel member is preferably secured to the underside of the base. The slidable member has side walls being spaced apart enough to accommodate a battery connector second part therebetween. This device also includes means for retaining a battery connector second part which includes at least one beam extending perpendicularly from the surface of the slidable member. The battery connector first part is secured to the base. A handle pivotally connected to a handle engaging portion of the channel member pivots so as to allow a slot engagement means to slide along base channel member. A slot formed in the side wall of the slidably interconnected member provides additional access when retaining battery connector second part.

In each of the embodiments of the invention, the means for retaining a battery connector second part comprise at least one beam extending perpendicularly from the upper surface of the slidable member. Preferably there are at least two such beams.

Accordingly, it is an object of this invention to provide a vehicle mounted battery connector assist unit for use in battery powered vehicles which remains attached to the vehicle and obviates the need to use handles or additional components attached to the battery portion of the battery connector.

It is another object of this invention to provide a vehicle mounted battery connector assist unit which permits the integration of the battery cable, connector, and handle relatively into the vehicle envelope.

It is yet another object of this invention to provide a vehicle mounted battery connector assist unit which provides quick and effective connection, as well as disconnection, of the two portions of a battery connector.

Reference will now be made to the accompanying drawings, in which:-
Fig. 1 is a perspective view of a lift truck which is representative of the type of vehicle that includes battery connectors, with the battery connector illustrative of the prior art.
Fig. 2 is a perspective view of a battery connector and battery connector assist unit representative of the prior art.
Fig. 3 is a perspective view of one embodiment of the invention with the cover being closed.
Fig. 4 is a perspective view similar to Fig. 3, but showing the cover being in an open position.
Fig. 5 is a perspective view similar to Fig. 4, but with both the cover and the battery connector being removed.
Fig. 6 is a vertical sectional view taken along line 6-6 of Fig. 5.
Fig. 7 is a perspective view of the slidable member shown in Fig. 5.
Fig. 8 is a front elevational view of a second embodiment of this invention.
Fig. 9 is a side elevational view taken from the left side of Fig. 8.
Fig. 10 is similar to Fig. 8, but with the battery connector removed.
Fig. 11 is a plan view of the second embodiment.
Fig. 12 is a perspective view of a third embodiment of the invention.
Fig. 13 is a front elevational view of the third embodiment of the invention.
Fig. 14 is a top plan view of the third embodiment of the invention.
Fig. 15 is a side elevational view thereof.
Fig. 16 is a vertical sectional view taken along line 16-16 of Fig. 13.

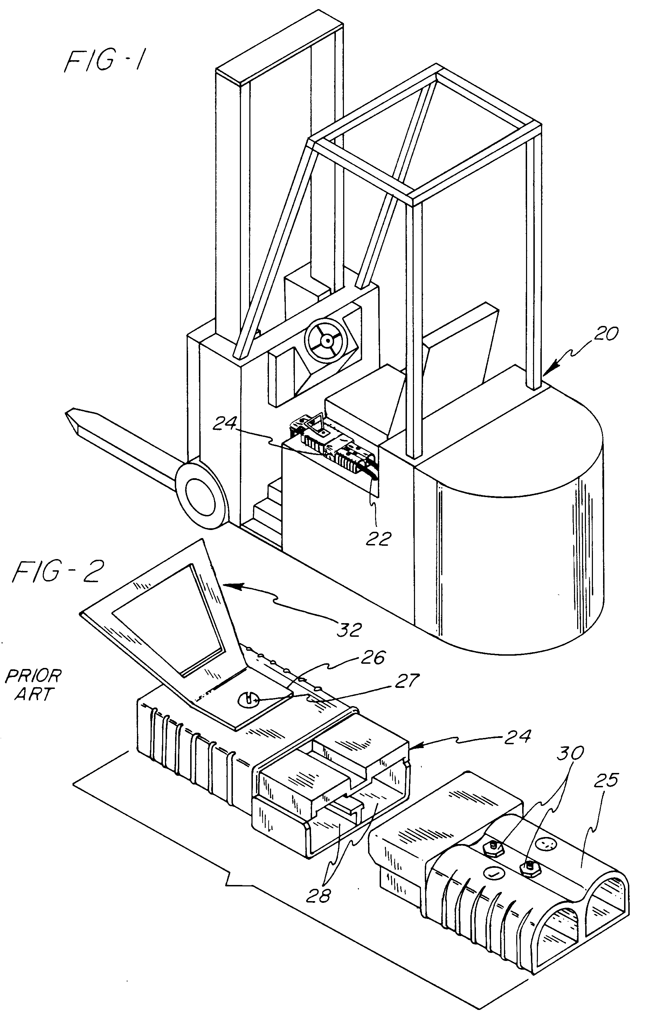

Referring now to the drawings, and particularly to Fig. 1, a fork lift truck of the type which includes a battery connector assist unit is shown, with the vehicle being designated by the numeral 20, the battery cable designated by the numerals 22 and 22b and the battery connector being designated by the numeral 24. The battery connector shown is a type SB connector, which is an industry standard in the United States for many electrically powered materials handling vehicles.

As illustrated in Fig. 2, the battery connector 24 comprises a connector first part 25 connected to the vehicle's electrical system and a connector second part 26 connected to a battery package. The connector second part has apertures (openings) 27 and means for electrical engagement 28 with the connector first part. Means for fixedly securing the connector first part to the vehicle are provided, typically in the form of screws 30 or bolts. A prior art battery connector handle 32 is shown as being secured to the connector second part at apertures 27.

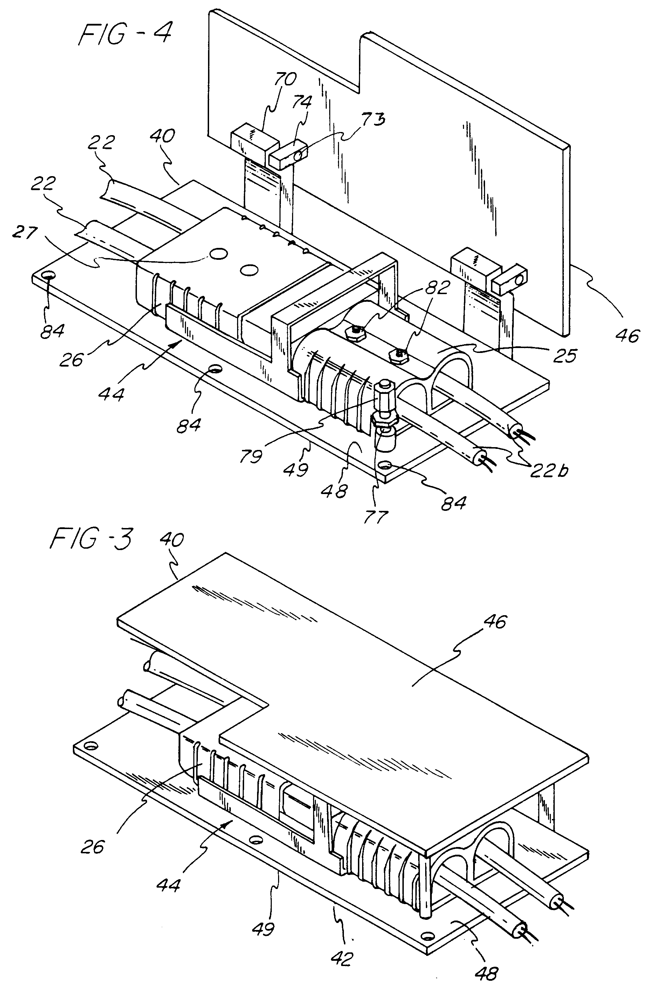

As shown in Figs. 3 and 4, the preferred embodiment of the invention discloses a battery connector assist unit designated generally by the numeral 40. The improved battery connector assist unit comprises a planar base member 42 and a slidably interconnected member (force applying means) 44. A cover is attached to the base a spaced distance above such base by cooperative closure means which also serve to regulate the closure of the cover plate 46.

Base member 42 includes a base upper surface 48 and a base lower surface 49. Slidable member 44 includes a slide base 50 having an upper surface 51 as well as a lower surface 52, which lower surface preferably is directly adjacent the base member 42. The slidable member also preferably includes a pair of side walls spaced apart enough to accommodate a battery connector second part therebetween. Extending across the slidable member at a height greater than the height of a connector first part is handle 55, preferably having side walls 56 and having a slide transversing member 57. Slide base 50 also has a channel 58 formed therein.

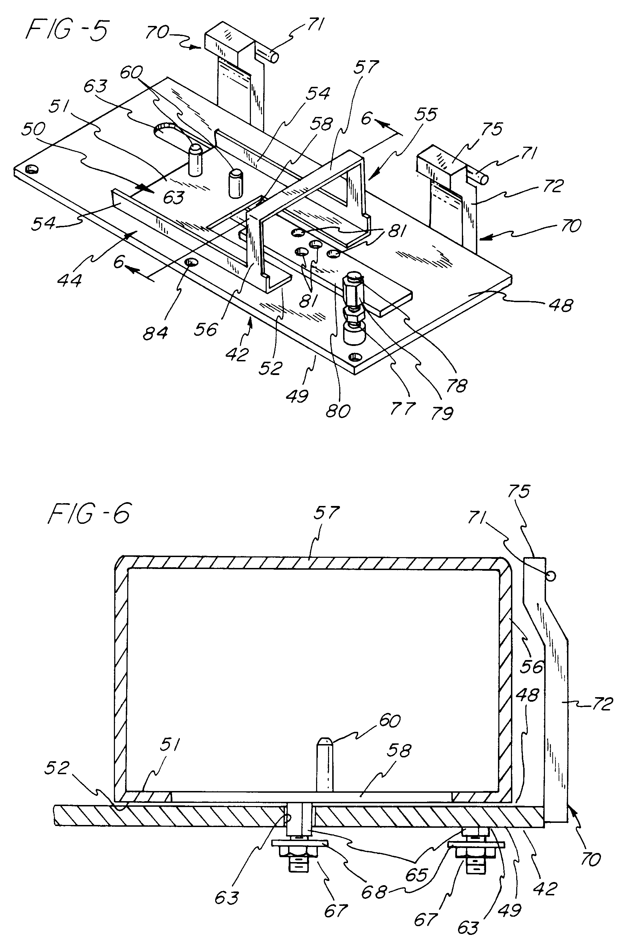

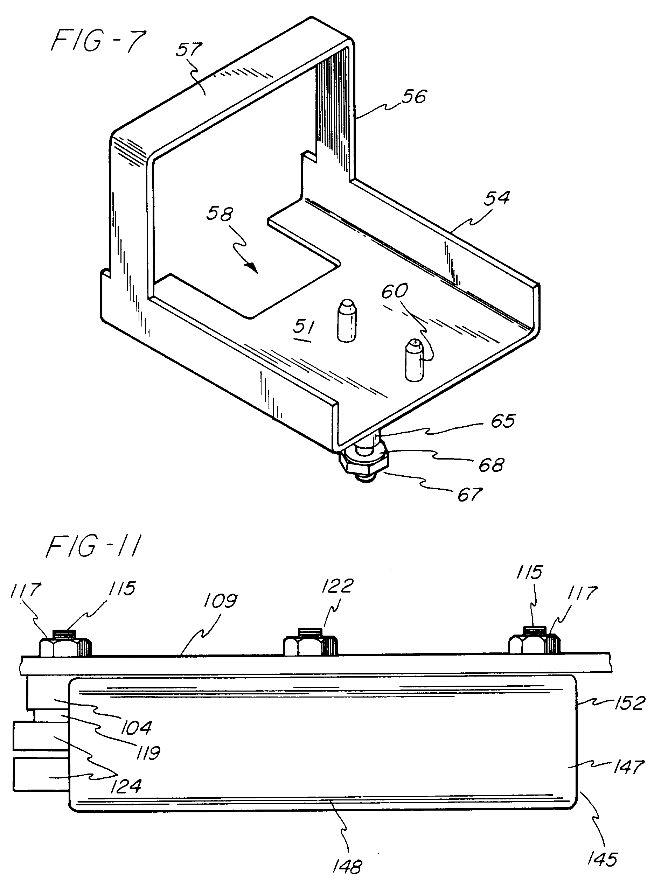

Means for temporarily retaining a battery connector second part, comprising projections 60, are shown in Figs. 5, 6, and 7 as preferably being located along the longitudinal axis of the slidable member 44 and located the same distance apart as apertures 27 in the connector second part 26. Preferably these projections are in the form of smooth sided, cantilevered force transmitting beams which assist in the positioning of the connector second part onto the slidable member 44. Preferably these projections 60 are of a height no greater than the height of the connector second part.

As can be seen by comparing Figs. 5 and 6, a pair of slots 63 extend in parallel relationship along base member 42. Slot engaging means 65 extend downwardly from slide lower surface 52 through slots 63 and permit slidable member 44 to be retained relative to base member 42 by slide retention means 67 which may be in the form of a screw-threaded nut. The slot engaging means 65 is of a diameter slightly less than that of the width of slot 63. Additionally, a flat washer 68 may be placed between retention means 67 and base lower surface 49.

Referring again to Figs. 4, 5 and 6, the cover plate 46 is attached to base 42 by means to regulate the closure of the cover plate. First cooperative closure means 70 are directly secured to base 42 and have a bar 71 projecting from respective side faces 72. An aperture 73 associated with second cooperative closure means 74 has bar 71 inserted therein. The extent of closure of the cover plate 46 is controlled by third cooperative closure means 77 which is preferably formed of a female threaded stud welded to base 42, topped by a jam nut, a hex shaped threaded end, and a rubber tip 78. The hex shaped threaded end 79 may be rotated relative to the base 42 so as to permit adjustment to the height of the closure means 77. Third cooperative closure means is positioned perpendicular to base member 42. The height of third cooperative closure means should permit the cover 46 to be positioned parallel to base member 42 in the closed position as shown in Fig. 3, thereby integrating the entire unit or assembly into the vehicle. The third cooperative closure means 77 preferably has a rubber tip 78 to reduce noise associated with the vibration of the cover plate against the metallic third cooperative closure means.

Referring again to Figs. 4 and 5, first connector alignment means 80 in the form of a plate is shown directly adjacent base member 42. First connector alignment means 80 have a plurality of apertures 81 therein which correspond to the alignment in various connector first parts, since not all connector first parts have connecting apertures in them which are the same orientation. For example, Fig. 4 discloses fastening means 82 securing the connector first part having the aperture alignment shown to base member 42. Base member 42 also has a plurality of weldment retaining means 84 which permit base member 42 to be secured to an existing fork lift 20 in the utilization of this invention. Alternatively the base member 42 could be incorporated as a weldment into the design of a fork lift similar in design to that shown in Fig. 1.

In this first embodiment of the invention, in actual operation a connector first part 25 is aligned on first connector alignment means 80 and secured thereto by fastening means 82. As shown in Fig. 5, the width of first connector alignment means 80 is less than the width associated with channel 58. Beams 60 are passed into the apertures 27 in connector second part 26 so as to temporarily retain the battery connector second part to the slidable member. The battery connector is joined by moving slidable member 44 through slots 63 toward first connector alignment means 80. The height of first connector alignment means 80 compensates for the height associated with slide base 50 to permit efficient insertion of the cooperating components of the battery connector. To unplug the battery connector, the handle of the slidable member is merely slidable displaced away from the first connector alignment means, thereby uncoupling the battery connector. The battery connector second part may then be easily removed from beams 60 by lifting the connector off the beams, the battery replaced and the new battery connector second part reinserted onto slidably interconnected member 44.

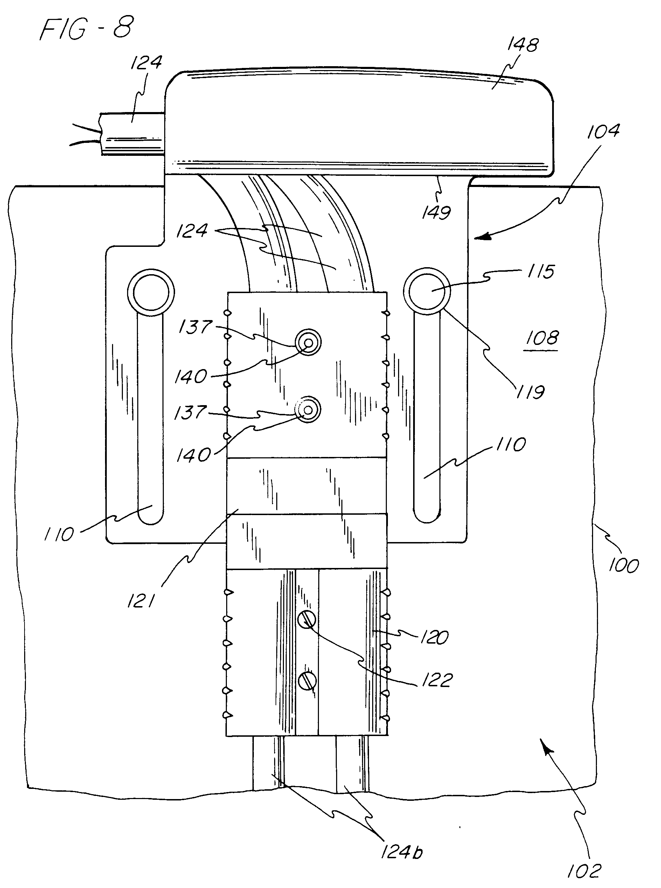

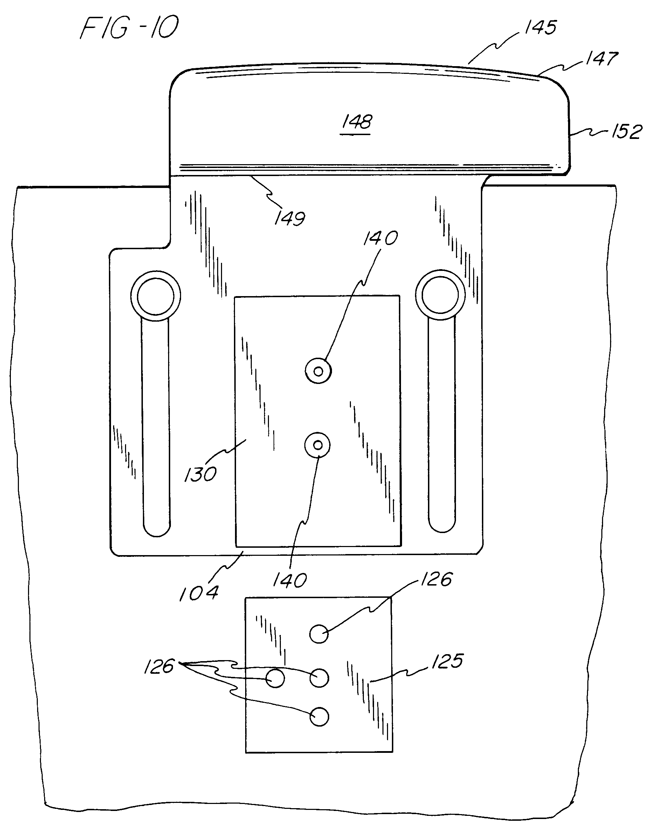

A modified embodiment of the invention is shown in Figs. 8, 9, 10 and 11 and is designated generally by the numeral 100. In this embodiment, the sliding occurs with respect to a vertical axis. This embodiment finds particular application in vehicles where there is no auxiliary switch to cut off the power for the vehicle in case of an emergency. This modified embodiment includes a vertical base member 102 and a slidably interconnected member 104. The base member 102 has a base outer surface 108 and a base inner surface 109. Formed in the slidably interconnected member 104 are at least one and preferably two slots 110, disposed vertically therein.

Slot engaging means 115, which could be in the form of a bolt are secured in cooperation with slide retention means 117 through both base member 102 and slidable member 104. As shown, slidable member 104 is preferably directly adjacent the base outer surface 108. In this embodiment of the invention, spring means 119, shown in the form of a curved spring washer, are positioned between the head of a slot engaging means 115 and slidable member 104 to reduce the vibration and noise associated with the sliding member.

The connector first part 120, also known as the drive side or portion of the connector is shown connected to the connector second part 121, also known as the battery side or portion of the connector. Battery cable 124b is shown entering the first part of the battery connector, while cable 124 enters the second part of the battery connector. A first connector alignment means 125 is positioned between connector first part 120 and base outer surface 108, such that the connector first part is spaced a distance apart from the base 102. Apertures 126 in the first connector alignment means 125 are aligned with the apertures in the connector first part so as to permit the securing of the connector first part to the base member by fastening means 122.

Second connector alignment means 130 is shown as projecting from slidable member 104, such that adjacent connector second part 121 is spaced a distance apart from the base 102. The second connector alignment means may be formed integral of slidable member 104, or it could be fabricated as a distinct component. Second connector alignment means 130 cooperates with first connector alignment means 125, although the thickness of alignment means 125 is greater than alignment means 130. For example, the thickness of the second connector alignment means 130 plus the thickness of the slidable member from which it projects is approximately equal to the thickness of the first connector alignment means 125.

Connector second part 121 has a plurality of connector apertures (openings) 137 therein, through which may be placed projections (force transmitting beams) 140. Preferably these means for retaining the battery side of a battery connector 121 extend normal the slidable member 104. These projections 140 are positioned to permit the connector to be aligned with the connector first part.

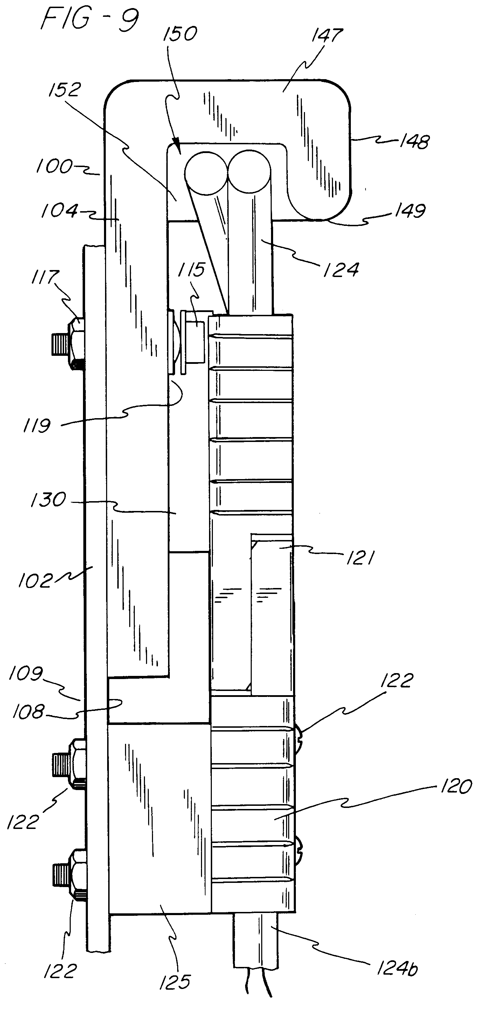

A handle portion 145 atop slidable member 104 includes a top surface portion 147, an outer front surface 148 with the outer front surface 148 having a front surface bottom 149. A cavity or channel 150 is provided inside a portion of the handle member 145 and is of a width so as to permit battery cable 124 to pass therethrough. At the opposite end of the handle portion, is a handle end wall 152. The handle, as can be best seen in Fig. 9, overlaps the components of the battery connector 120 and 121 in the operative embodiment.

In the actual operation of this embodiment, the connector first part is secured to the base by fastening means 122. The connector second part 121 is placed over the projections 140 with battery cable 124 extending upwardly into the cavity 150 of handle 145. When the connector second part is thus to be engaged, the slot engaging means 115 is oriented towards the bottom of slots 110. The downward depression of the handle 145 causes the components of the battery connector to be joined. Similarly, grasping the handle 145 and pulling upwardly thereon disconnects the electrical circuit. Optimally, the first connector alignment means 125 and second connector means 130 are of heights such that an efficient insertion of the battery connector components can be made.

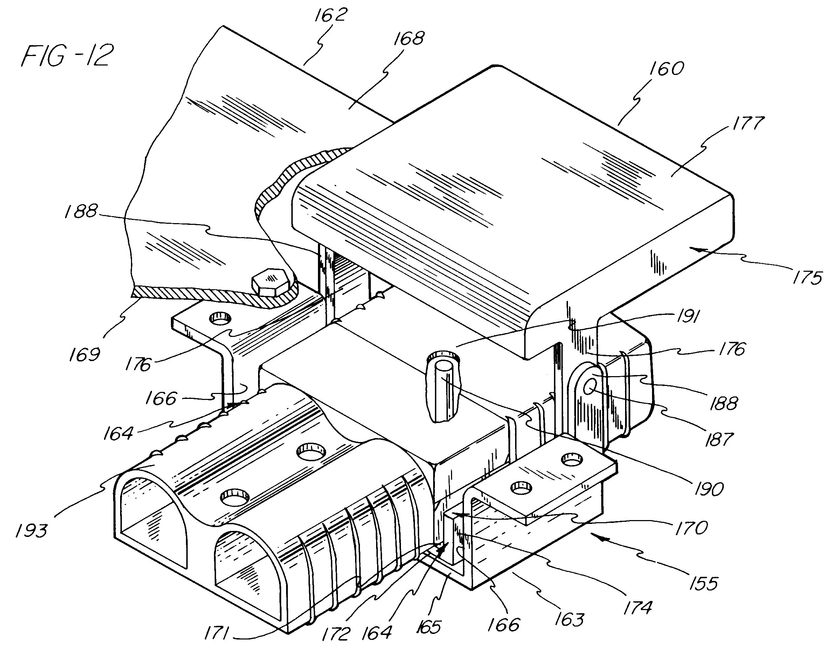

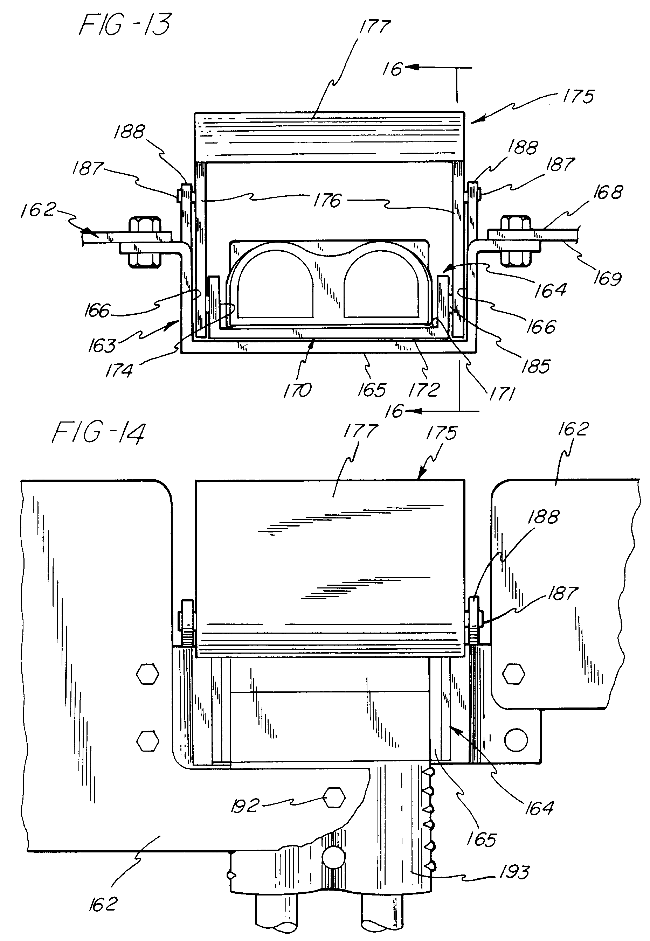

Another modified embodiment of the invention is shown in Figs. 12, 13, 14, 15 and 16 and is designated generally by the numeral 160. In this embodiment, the sliding preferably occurs with respect to a horizontal axis. This embodiment finds particular application in vehicles, where there is no auxiliary switch to cut off the power for the vehicle in case of an emergency. This modified embodiment includes a handle secured to a base channel member which is in turn secured to a base 162. The base channel member 163 has slidably positioned therein a slidably interconnected member 164. The base channel member 163 is formed with a planar bottom portion 165 and with channel member side walls 166 which are preferably parallel to one another and perpendicular to bottom portion 165.

The base 162 has a base upper surface 168 as well as a base lower surface 169. The slidably interconnected member 164 comprises a slide base 170 having an upper surface 171 and a lower surface 172 as well as slide side walls 174. Slide side walls 174 are preferably parallel to one another and perpendicular with respect to slide base 170. The width of the slidably interconnected member 164 is slightly less than the width of the base channel member 163 such that the slidably interconnected member 164 can slide therethrough.

In this third embodiment of the invention, a handle 175 preferably has a pair of handle side walls 176 and a slide transversing member 177. The pair of handle side walls 176 are secured to the base channel member 163 and extend downwardly from the slide transversing member 177 such that the bottom portion of the handle side walls 176 is disposed between the base channel member side walls 166 and the slide base side wall 174. The slide transversing member is preferably of a relatively planar, rectangular configuration.

Located in each of the side walls of the slide side wall 174 is a slot 183 through which a slot engaging means 185 passes. The slot engagement means 185 has its one end secured to the handle side wall 176, such that as the handle 175 is pivoted about pivot pin 187, the slot engagement means 185 is forced against slot wall 194, thereby moving slidable member 164 and performing the disconnection. Additional manual movement of slidable member 164 can be obtained after disconnection along slot 183 for accessibility to the connector second part. The pivoting occurs in the handle engaging portion 188 of the channel member side wall.

Means are provided in the form of projections 190 which extend upwardly from the upper surface of slide base 170 to secure the connector second part 191 to the slide base 170. Similarly fastening means 192 are provided for securing the base to the connector first part 193.

In the actual operation of this embodiment, with reference to Figs. 12, 15 and 16, the connector first part is secured to the base by fastening means 192. The connector second part 191 is placed over the projections 190 at the approximate position shown by 191′. The handle at this time is about in the location shown by the dashed line 160′. The slot engagement means and the slot are in the positions 185′ and 183′ respectively. Manual force is then preferably applied to the slide base and connector second part until the connector first and second parts are adjacent one another. The slide base and connector second part are preferably in positions 170'' and 191'' respectively.

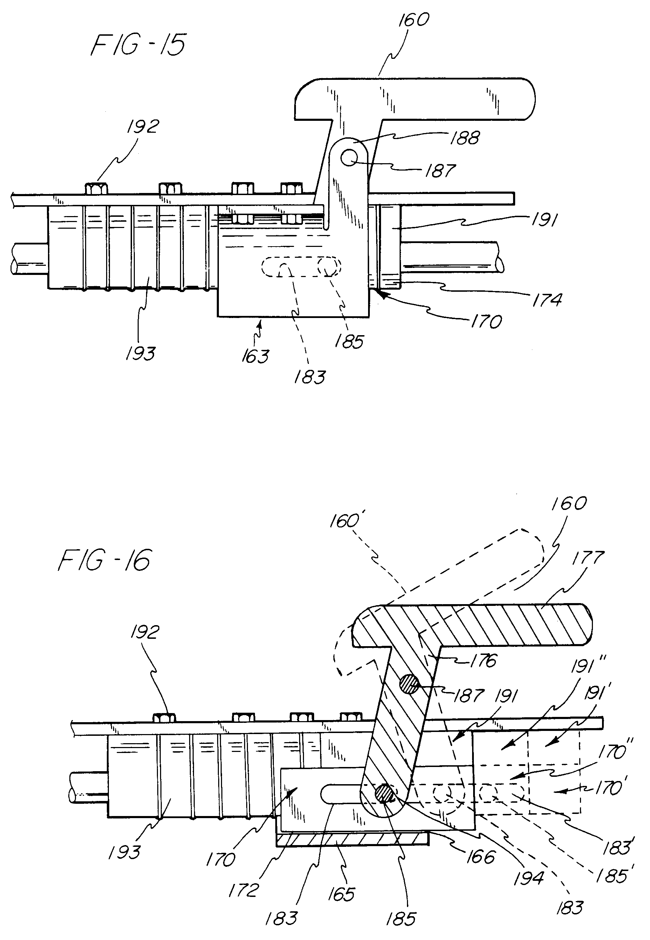

The handle 160′ may then be pivoted about pivot pin 187 to the position shown in Figs. 12 and 15 by longitudinally displacing the slide base within the base channel member 163, during which pivoting the slot engagement means 185 passes along slot 183 until it comes to the end. Additional manual force may then be applied to the slide base and connector second part until a secure joining is made between the connector first part and second parts. The slide base and connector second part are preferably in positions 170 and 191 respectively, with the slot engagement means and the slot being in positions 185 and 183 respectively.

Similarly, to effect disengagement of the battery connectors, grasping the handle 175 and pulling so as to pivot the handle to the position shown in 160′, disconnects the electrical circuit. At this point, the slide base formerly at position 170 is approximately in the position shown in 170'' and the connector second part formerly at position 191 is in the approximate position shown by 191'', which position is disconnected. To effect removal of the connector second part from the unit, the slide base is then preferably manually moved away from connector first part 193 as slot engagement means 185 moves along slot 183 so as to permit the connector second part to be lifted from projection 190, approximately at position 191′ with the slide base then being at position 170′. It should also be appreciated that although there is a slight arcuate path associated with the movement of slot engagement means 185, the space between the bottom portion 165 and the lower surface 172 permit the slide base to essentially float to a limited degree within the base channel member 163.

While the form of apparatus herein described constitutes a preferred embodiment of this invention, it is to be understood that the invention is not limited to this precise form of apparatus and that changes may be made therein without departing from the scope of the invention, which is defined in the appended claims.

## Claims

1. Apparatus (40) for connecting and disconnecting a replaceable battery and a battery powered vehicle (20) wherein the battery is provided with an electrical connector (26) having openings (27, 137) formed in the connector and wherein the vehicle (20) is provided with a complementary electrical connector (25), said apparatus including:
means (82) for securing the vehicle electrical connector (25) in fixed relation to the vehicle;
a force applying means (44, 104, 175) for moving the battery electrical connector (26) longitudinally of its axis to connect and disconnect the battery electrical connector (26) respectively to and from the vehicle electrical connector (25)
characterised in that the force applying means (44, 104, 175) is intended to be permanently associated with the vehicle (20) and the vehicle electrical connector (25) and includes at least one force transmitting beam (60, 140, 190) also associated with the vehicle extending therefrom for engagement with one of the openings (27, 137) in the battery electrical connector (26), said force transmitting beam (60, 140, 190) being of a shape matching said one opening (27, 137) in said battery electrical connector (26).

2. Apparatus as claimed in claim 1 wherein the openings formed in said battery electrical connector (26) are a pair of longitudinally aligned openings (27, 137) and wherein said force applying means (44, 104, 175) includes a pair of smooth sided force transmitting beams (60, 140, 190) for engaging said pair of openings.

3. Apparatus as claimed in claim 1 or claim 2 wherein the means for securing the vehicle electrical connector (25) includes a base (42, 102), the apparatus further including a slidable member (44) inter-connected to said base, said slidable member having a handle member (55) and a slide base (50), said slide base having an upper surface (51) and a lower surface (52), said lower surface (52) being adjacent said base (42), said slidable member (44) being slidable over said base (50) responsive to force exerted on said handle member (55), said slidable member (44) having said at least one force transmitting beam (60) extending perpendicularly from said upper surface (51) for slidably retaining thereon said battery electrical connector (26).

4. Apparatus as claimed in claim 3 wherein said base (42) includes at least one slot (63) therein, and wherein said slidable member (44) includes means (65) for engaging said slot (63) for maintaining alignment between said base (42) and said slidable member (44).

5. Apparatus as claimed in claim 3 or claim 4 wherein said base (42) includes means (81) aligning the vehicle electrical connector with the battery electrical connector.

6. Apparatus as claimed in any one of claims 3 to 5 wherein said slidable member (44) has side walls (56), said side walls (56) being spaced apart enough to accommodate the battery electrical connector therebetween.

7. Apparatus as claimed in any one of claims 3 to 6 wherein said slidable member (44) is located directly adjacent said base (42).

8. Apparatus as claimed in any one of claims 3 to 7 wherein said base (42) has a cover plate (46) attached thereto a spaced distance above said base (42), said cover plate being in a closed position parallel to said base, the connector parts being able to be engaged in operative relationship when said cover plate (46) is in its closed position.

9. Apparatus as claimed in claim 8 wherein said base (42) has means (77) for regulating the closure of the said cover plate (46).

10. Apparatus as claimed in any one of claims 3 to 9 wherein said slidable member (44) includes means (60, 54) for aligning the battery electrical connector with the vehicle electrical connector.

11. Apparatus as claimed in claim 3 wherein said slidable member (104) includes at least one slot (110) therein, said base (102) having means (115) for engaging said slot (110) for maintaining alignment between said base (102) and said slidable member (104), and said base (102) includes means (122) for aligning the vehicle electrical connector with the battery electrical connector.

12. Apparatus as claimed in claim 1 comprising a vertical base (102) including the means (122) for fixedly securing thereto the vehicle electrical connector (120) and means (115) for engaging a slot (110), and a slidable member (104) interconnected to said base (102), said slidable member (104) having a handle member (145), said slidable member (104) being slidable along a vertical axis said slidable member (104) having at least one slot (110) engageable with said slot engaging means (115), and said slidable member (104) having means (140) for slidably retaining thereon the battery electrical connector.

13. Apparatus as claimed in claim 12 wherein said means (122) for securing the vehicle electrical connector (120) is positioned to permit the vehicle electrical connector (120) to be aligned with the battery electrical connector (121).

14. Apparatus as claimed in claim 12 or 13 including a vehicle connector and a battery connector alignment means of different thicknesses, the thickness of the vehicle connector alignment means (125) being greater than that of the battery connector alignment means (130).

15. Apparatus as claimed in any one of claims 12 to 14 wherein said handle member (145) is atop said slidable member (104).

16. Apparatus as claimed in any one of claims 12 to 15 wherein said handle member (145) includes a cavity (150) therein, said cavity being of a width sufficient to permit the passage therethrough of a battery cable (124).

17. A method of connecting a replaceable battery to a battery powered vehicle (20) with an apparatus (40) intended to be permanently associated with the vehicle wherein the battery is provided with an industry standard battery electrical connector (26) having openings (27, 137) and the vehicle is provided with a complementary vehicle electrical connector (25), the method comprising the steps of:
securing the vehicle electrical connector (25) in fixed relation to the vehicle, the vehicle electrical connector (25) being associated with a force applying means (44) permanently associated with the vehicle;
placing one of the openings (27) of the battery electrical connector (26) over at least one force transmitting beam (60) of the force applying means (44) which force transmitting beam (60) is of a shape matching said one opening (27, 137) in said battery electrical connector (26) to assist in connecting the battery electrical connector (26) and vehicle electrical connector (25), and
manipulating the force applying means (44) to connect the battery electrical connector (26) to the vehicle electrical connector (25).

18. Method according to claim 17 comprising the further steps of manipulating the force applying means (44) to disconnect the battery electrical connector (26) from the vehicle electrical connector and removing the battery electrical connector from the at least one force transmitting beam.

19. Method according to claim 17 wherein the step of placing the battery electrical connector (26) over at least one force transmitting beam (60) involves placing a pair of a longitudinally aligned openings (27, 137) in the battery electrical connector (26) over a pair of longitudinally aligned forced transmitting beams (60), and
the step of manipulating the force applying means (44) moves the battery electrical connector (26) longitudinally of its axis.

## Patentansprüche

1. Vorrichtung (40) zum Verbinden und Lösen einer auswechaelbaren Batterie und einem batteriebetriebenen Fahrzeug (20), wobei die Batterie mit einem elektrischen Verbindungsgtecker (26) versehen ist, der im Stecker ausgebildete Öffnungen (27,137) aufweist und worin das Fahrzeug (20) mit einem komplementären Steckverbinder (25) ausgestattet ist, und die Vorrichtung aufweist:
Ein Mittel (82) zum Sichern des fahrzeugseitigen elektrischen Steckers (25) in fester Beziehung zum Fahrzeug;
Ein Mittel zum Anlegen von Kraft (44,104,175), um den batterieseitigen elektrischen Stecker (26) entlang seiner Längsachse zu bewegen, zum Verbinden und Lösen des batterieaeitigen elektrischen Steckers (26) mit dem/von dem fahrzeugseitigen elektrischen Stecker (25);
dadurch gekennzeichnet, daß das Mittel zum Kraftanwenden (44,104,175) vorzugsweise immer mit dem Fahrzeug (20) und dem fahrzeugseitigen elektrischen Stecker (25) verbunden ist und wenigstens einen auch mit dem Fahrzeug verbunden, und von diesem abstehenden kraftübertragenden Riegel (60,140,190) aufweist, zum Eingriff mit einer der Öffnungen (27,137) im batterieseitigen elektrischen Stecker (26), wobei der kraftübertragende Riegel (60,140,190) eine Form aufweist, die mit der Öffnung (27,137) im batterieseitigen elektrischen Stecker (26) zusammenpaßt.

2. Vorrichtung nach Anspruch 1 worin die Öffnungen des batterieseitigen elektrischen Steckers (26) aus einem Paar von längs angeordneten Öffnungen (27,137) bestehen und worin das Mittel zur Kraftausübung (44,104,175) ein Paar von seitlich glatt ausgebildeten Riegeln (60,140,190) zum Eingriff in die Öffnungen beinhaltet.

3. Vorrichtung nach Anspruch 1 oder Anspruch 2, worin das Mittel zum Sichern des fahrzeugseitigen elektrischen Steckers (25) eine Grundplatte (42, 102) aufweist, und die Vorrichtung weiterhin ein verschiebliches Teil (44) beinhaltet, das mit der Grundplatte verbunden ist, wobei das verschiebliche Teil ein Griffteil (55) und eine Gleitplatte (50) aufweist, wobei die Gleitplatte (50) eine obere Fläche (51) und eine untere Fläche (52) hat, und die untere Fläche (52) auf der Grundplatte (42) liegt, und das verschiebliche Teil (44) über die Grundplatte (50) gleiten kann, in Reaktion auf Kraft, die auf das Griffteil (55) ausgeübt wird, wobei das verschiebliche Teil (44) wenigstens einen der kraftübertragenden Riegel (60) aufweist, welcher senkrecht von der oberen Fläche (51) absteht, um daran den batterieseitigen elektrischen Stecker verschieblich zu halten.

4. Vorrichtung nach Anspruch 3, worin die Grundplatte (42) wenigstens einen Schlitz (63) aufweist, und worin das verschiebliche Teil (44) ein Mittel (65) zum Eingreifen in den Schlitz (63) aufweist, um die Ausrichtung der Grundplatte (42) gegenüber dem verschieblichen Teil (44) aufrechtzuerhalten.

5. Vorrichtung nach Anspruch 3 oder Anspruch 4, worin die Grundplatte (42) ein Mittel (81) zum Ausrichten des fahrzeugseitigen elektrischen Steckers mit dem batterieseitigen elektrischen Stecker aufweist.

6. Vorrichtung nach einem der Ansprüche 3 bis 5, worin das verschiebliche Teil (44) Seitenwände (56) aufweist, wobei die Seitenwände (56) weit genug auseinanderstehen, um den batterieseitigen elektrischen Stecker dazwischen aufzunehmen.

7. Vorrichtung nach einem der Ansprüche 3 bis 6, worin das verschiebliche Teil (44) direkt an der Grundplatte (42) anliegt.

8. Vorrichtung nach einem der Ansprüche 3 bis 7, worin die Grundplatte (42) eine damit verbundene Deckplatte (46) in einem festen Abstand über der Grundplatte (42) aufweist, wobei die Deckelplatte in geschlossenem Zustand parallel zur Grundplatte ist, und die Verbindungteile miteinander in zusammenwirkenden Eingriff gebracht werden können wenn die Deckplatte (46) in ihrer geschlossen Stellung ist.

9. Vorrichtung nach Anspruch 8 worin die Grundplatte (42) ein Mittel (77) zum Regulieren des Schließzustandes der Deckplatte (46) aufweist.

10. Vorrichtung nach einem der Ansprüche 3 bis 9, worin das verschiebliche Teil (44) ein Mittel (60,54) zum Ausrichten des batterieseitigen elektrischen Steckers mit dem fahrzeugseitigen elektrischen Stecker aufweist.

11. Vorrichtung nach Anspruch 3, worin das verschiebliche Teil (104) wenigstens einen Schlitz (110) aufweist, und die Grundplatte (102) ein Mittel (115) zum Eingreifen in den Schlitz (110) aufweist, um die Ausrichtung der Grundplatte (102) mit dem verschieblichen Teil (104) aufrecht zu erhalten, wobei die Grundplatte (102) ein Mittel (122) zum Ausrichten des fahrzeugseitigen elektrischen Steckers mit dem batterieseitigen elektrischen Steckers aufweist.

12. Vorrichtung nach Anspruch 1 mit einer vertikalen Grundplatte (102) mit Mitteln (122), um daran den fahrzeugseitigen elektrischen Stecker (120) zu befestigen und Mitteln (115) zum Eingreifen in einen Schlitz (110), und ein verschiebliches, mit der Grundplatte (102) verbundenes Teil (104), wobei das verschiebliche Teil (104) ein Griffteil (145) aufweist, und das verschiebliche Teil (104) entlang einer vertikalen Achse verschiebliche ist, und das verschiebliche Teil (104) wenigstens einen Schlitz (110) aufweist, in welchen die schlitzeingreifenden Mittel (115) eingreifen, und das verschiebliche Teil (104) ein Mittel zum verschieblichen Festhalten des batterieseitigen elektrischen Steckers aufweist.

13. Vorrichtung nach Anspruch 12, worin das Mittel (122) zum Sichern des fahrzeugseitigen elektrischen Steckers (120) so positioniert ist, daß der fahrzeugseitige elektrische Stecker (120) mit dem batterieseitigen elektrischen Stecker (121) ausgerichtet werden kann.

14. Vorrichtung nach Anspruch 12 oder 13 mit einem fahrzeugseitigen Steckerausrichtmittel und einem batterieseitigen Steckerausrichtmittel von unterschiedlicher Dicke, wobei die Dicke des fahrzeugseitigen Steckerausrichtmittels (125) größer ist als die des batterieseitigen Steckerauarichtmittels (130).

15. Vorrichtung nach einem der Ansprüche 12 bis 14, worin das Griffteil (145) auf dem verschieblichen Teil (104) angeordnet ist.

16. Vorrichtung nach einem der Ansprüche 12 bis 15, worin das Griffteil (145) einen Hohlraum (150) aufweist, der breit genug ist, um die Durchführung eines Batteriekabels (124) zu erlauben.

17. Ein Verfahren zum Verbinden einer auswechselbaren Batterie mit einem batteriebetriebenen Fahrzeug (20), mit einer Vorrichtung (40) zur vorzugsweise dauernden Verbindung mit dem Fahrzeug, worin die Batterie mit einem elektrischen Batteriestecker (26) nach Industriestandard ausgestattet ist, der Öffnungen (27,137) aufweist, und das Fahrzeug mit einem komplementären fahrzeugseitigen elektrischen Stecker (25) ausgestattet ist, und das Verfahren folgende Schritte aufweist:
Befestigen des fahrzeugseitigen elektrischen Steckers (25) in fester Beziehung zum Fahrzeug, wobei der fahrzeugseitige elektrische Stecker (25) mit einem Mittel (44) zur Kraftausübung verbunden ist, das dauernd am Fahrzeug angeordnet ist;
Plazieren eine der Öffnungen (27) des batterieseitigen elektrischen Steckers (26) über wenigstens einem kraftübertragenden Riegel (60) des kraftaufbringenden Mittels (44), wobei der kraftübertragende Riegel (60) derart ausgebildet ist, daß er mit einer der Öffnungen (27,137) im batterieseitigen elektrischen Steckers (26) zusammenpaßt und die Verbindung des batterieseitigen elektrischen Steckers (26) mit dem fahrzeugseitigen elektrischen Steckers (25) zu unterstützen, und
Betätigen des kraftausübenden Mittels (44), um den batterieseitigen elektrischen Stecker (26) mit dem fahrzeugseitigen elektrischen Stecker (25) miteinander zu verbinden.

18. Verfahren nach Anspruch 17 mit den weiteren Schritten: Betätigen des kraftausübenden Mittels (44), um den batterieseitigen elektrischen Stecker (26) vom fahrzeugseitigen elektrischen Stecker zu lösen und den batterieseitigen elektrischen Stecker von wenigstens einem kraftübertragenden Riegel zu lösen.

19. Verfahren nach Anspruch 17, worin der Schritt des Plazierens des batterieseitigen elektrischen Steckers (26) über wenigstens einen kraftübertragenden Riegel (60) ein Plazieren eines Paars von in Längsrichtung ausgerichteten Öffnungen (27,137) im batterieseitigen elektrischen Steckers (26) über einem Paar von längs ausgerichteten kraftübertragenden Riegeln (60) umfaßt, und
den Schritt des Betätigens des kraftausübenden Mittels (44) zum Bewegen des batterieseitigen elektrischen Steckers (26) entlang seiner Längsachse.

## Revendications

1. Appareil (40) pour connecter et déconnecter une batterie remplaçable et un véhicule (20 alimenté par une batterie, où la batterie est pourvue d'un connecteur électrique (26) possédant des ouvertures (27, 137) formées dans le connecteur, et où le véhicule (20) est pourvu d'un connecteur électrique complémentaire (25), ledit appareil comprenant :
un moyen (82) pour fixer le connecteur électrique du véhicule (25) en relation fixe au véhicule ;
un moyen d'application d'une force (44, 104, 175) pour déplacer le connecteur électrique (26) de la batterie, longitudinalement par rapport à son axe, pour connecter le connecteur électrique (26) de la batterie au connecteur électrique (25) du véhicule, et à l'en déconnecter,
caractérisé en ce que le moyen d'application d'une force (44, 104, 175) est destiné à être associé d'une manière permanente au véhicule (20) et au connecteur électrique (25) du véhicule, et comprend au moins une poutre de transmission de force (60, 140, 190), elle aussi associée au véhicule, s'étendant à partir de ce dernier, pour entrer en prise avec l'une des ouvertures (27, 137) aménagées dans le connecteur électrique (26) de la batterie, ladite poutre de transmission d'une force (60, 140, 190) ayant une forme qui épouse ladite une ouverture (27, 137) aménagée dans le connecteur électrique (26) de la batterie.

2. Appareil selon la revendication 1, dans lequel les ouvertures formées dans ledit connecteur électrique (26) de la batterie représentent une paire d'ouvertures (27, 137) en alignement longitudinal, et où ledit moyen d'application d'une force (44, 104, 175) comprend une paire de poutres de transmission d'une force, à faces lisses (60, 140, 190), pour les faire entrer en prise avec ladite paire d'ouvertures.

3. Appareil selon la revendication 1 ou la revendication 2, dans lequel le moyen de fixation du connecteur électrique (25) du véhicule comprend une base (42, 102), l'appareil comprenant en outre un organe coulissant (44) interconnecté à ladite base, ledit organe coulissant ayant un organe de manette (55) et une base servant de coulisseau (50), ladite base servant de coulisseau ayant une surface supérieure (51) et une surface inférieure (52), ladite surface inférieure (52) étant au voisinage immédiat de ladite base (42), ledit organe coulissant (44) pouvant coulisser sur ladite base (50) en réponse à une force exercée par ledit organe de manette (55), ledit organe coulissant (44) étant tel que ladite au moins une poutre de transmission d'une force (60) s'étend perpendiculairement à partir de ladite surface supérieure (51), pour retenir sur cette dernière, d'une manière coulissante, ledit connecteur électrique (26) de la batterie.

4. Appareil selon la revendication 3, dans lequel ladite base (42) comprend au moins une rainure (63), et où ledit organe coulissant (44) comprend un moyen (65) pour entrer en prise avec ladite rainure (63), pour maintenir un alignement entre ladite base (42) et ledit organe coulissant (44).

5. Appareil selon la revendication 3 ou la revendication 4, dans lequel ladite base (42) comprend un moyen (81) assurant l'alignement du connecteur électrique du véhicule avec le connecteur électrique de la batterie.

6. Appareil selon l'une quelconque des revendications 3 à 5, dans lequel ledit organe coulissant (44) possède des parois latérales (56), lesdites parois latérales (56) étant suffisamment écartées l'une de l'autre pour loger entre elles le connecteur électrique de la batterie.

7. Appareil selon l'une quelconque des revendications 3 à 6, dans lequel ledit organe coulissant (44) est situé en contiguïté directe avec ladite base (42).

8. Appareil selon l'une quelconque des revendications 3 à 7, dans lequel ladite base (42) possède une plaque de couverture (46) qui y est fixée à une certaine distance au-dessus de la base (42), ladite plaque de couverture étant, en position fermée, parallèle à ladite base, les éléments du connecteur étant à même d'entrer en prise, en relation opérationnelle, quand ladite plaque de couverture (46) est en position fermée.

9. Appareil selon la revendication 8, dans lequel ladite base (42) possède un moyen (77) pour réguler la fermeture de ladite plaque de couverture (46).

10. Appareil selon l'une quelconque des revendications 3 à 9, dans lequel ledit organe coulissant (44) comprend un moyen (60, 54) pour aligner le connecteur électrique de la batterie et le connecteur électrique du véhicule.

11. Appareil selon la revendication 3, dans lequel ledit organe coulissant (104) comprend au moins une rainure (110), ladite base (102) possédant un moyen (105) destiné à entrer en prise avec la rainure (110) pour maintenir l'alignement entre ladite base (102) et ledit organe coulissant (104), et ladite base (102) comprend un moyen (122) pour aligner le connecteur électrique du véhicule et le connecteur électrique de la batterie.

12. Appareil selon la revendication 1, qui comprend une base verticale (102) comprenant le moyen (122), pour permettre d'y assujettir d'une manière fixe le connecteur électrique (120) du véhicule, et un moyen (115) pour entrer en prise avec une rainure (110), et un organe coulissant (104) interconnecté à ladite base (102), ledit organe coulissant (104) possédant un organe de manette (145), ledit organe coulissant (104) pouvant coulisser le long d'un axe vertical, ledit organe coulissant (104) ayant au moins une rainure (110) pouvant entrer en prise avec le moyen (115) servant à entrer en prise avec la rainure, et ledit organe coulissant (104) possédant un moyen (140) pour retenir sur lui, d'une manière coulissante, le connecteur électrique de la batterie.

13. Appareil selon la revendication 12, dans lequel ledit moyen (122) destiné à assujettir le connecteur électrique (120) du véhicule est positionné de façon à permettre au connecteur électrique (120) du véhicule d'être en alignement avec le connecteur électrique (121) de la batterie.

14. Appareil selon la revendication 12 ou 13, qui comprend un moyen d'alignement du connecteur du véhicule et un moyen d'alignement du connecteur de la batterie, ayant des épaisseurs différentes, l'épaisseur du moyen d'alignement (125) du connecteur du véhicule étant supérieure à celle du moyen d'alignement (130) du connecteur de la batterie.

15. Appareil selon l'une quelconque des revendications 12 à 14, dans lequel ledit organe de manette (145) se trouve au-dessus dudit organe coulissant (104).

16. Appareil selon l'une quelconque des revendications 12 à 15, dans lequel ledit organe de manette (145) comporte une cavité (150), ladite cavité ayant une largeur suffisante pour permettre le passage, à travers elle, d'un câble de batterie (124).

17. Procédé pour connecter une batterie remplaçable à un véhicule (20) alimenté par une batterie, comportant un appareil (40) destiné à être associé d'une manière permanente au véhicule, où la batterie est pourvue d'un connecteur électrique normalisé de batterie (126), qui comporte des ouvertures (27, 137), et le véhicule est pourvu d'un connecteur électrique complémentaire (25) destiné au véhicule, procédé qui comprend les étapes consistant :
à assujettir le connecteur électrique (25) du véhicule en relation fixe au véhicule, le connecteur électrique (25) du véhicule étant associé à un moyen d'application d'une force (44) associé en permanence au véhicule ;
à placer l'une des ouvertures (27) du connecteur électrique (26) de la batterie sur au moins une poutre de transmission de force (60) du moyen d'application d'une force (44), ladite poutre de transmission d'une force (60) ayant une forme qui épouse ladite une ouverture (27, 137) dudit connecteur électrique (26) de la batterie pour faciliter la connexion du connecteur électrique (26) de la batterie au connecteur électrique (25) du véhicule, et
à manipuler le moyen d'application d'une force (44) pour connecter le connecteur électrique (26) de la batterie au connecteur électrique (25) du véhicule.

18. Procédé selon la revendication 17, qui comprend les étapes supplémentaires consistant à manipuler le moyen d'application d'une force (44) pour déconnecter le connecteur électrique (26) de la batterie du connecteur électrique du véhicule, et à retirer le connecteur électrique de la batterie d'au moins une poutre de transmission d'une force.

19. Procédé selon la revendication 17, dans lequel l'étape consistant à mettre en place le connecteur électrique (26) de la batterie sur au moins une poutre de transmission d'une force (60) met en jeu la mise en place d'une paire d'ouvertures en alignement longitudinal (27, 137) dans le connecteur électrique (26) de la batterie au-dessus d'une paire de poutres de transmission d' une force (60) en alignement longitudinal, et l'étape de manipulation du moyen d'application d'une force (44) déplace le connecteur électrique (26) de la batterie longitudinalement par rapport à son axe.
